# FASCICULE DE BREVET EUROPEEN

(11) **EP 2 567 806 B1**
(45) Date de publication et mention de la délivrance du brevet: **22.02.2017**
(21) Numéro de dépôt: 12182246.4
(22) Date de dépôt: 29.08.2012
(51) Int. Cl.: B29C 70/34, B29D 99/00, B29C 70/20, B29L 31/30, B64C 1/08, B64F 5/00, B64C 1/06, B29C 33/30, B29C 33/76

(54) **PROCÉDÉ ET DISPOSITIF DE FABRICATION DE STRUCTURE COMPORTANT UNE PEAU ET DES RAIDISSEURS**
VERFAHREN UND VORRICHTUNG ZUR HERSTELLUNG EINER STRUKTUR ENTHALTEND EINE HAUT UND VERSTEIFUNGSELEMENTE
METHOD AND DEVICE FOR THE FABRICATION OF A STRUCTURE COMPRISING A SKIN AND STIFFENERS

(30) Priorité: 07.09.2011 FR 1157928
(43) Date de publication de la demande: 13.03.2013
(73) Titulaire: Airbus Operations, 31060 Toulouse (FR)
(72) Inventeur: Blot, Philippe, 44000 Nantes (FR)
(74) Mandataire: Santarelli

(56) Documents cités:
- EP-A2- 2 317 126
- WO-A2-2004/011169
- FR-A1- 2 953 754
- GB-A- 576 422
- US-A1- 2008 224 360
- US-B1- 7 479 201

## Description

L'invention est relative à un procédé de fabrication d'une structure comprenant une peau et des raidisseurs, en particulier un fuselage d'aéronef en matériaux composites, et à un dispositif associé.

De façon usuelle, lorsque l'on réalise un fuselage d'aéronef en matériaux composites, ce dernier est constitué de panneaux possédant des raidisseurs longitudinaux à section en T, L, Z ou en Oméga (appelés lisses).

Afin de consolider la structure, des cadres de fuselage sont rapportés perpendiculairement aux raidisseurs et fixés aux panneaux à l'aide de pièces communément appelées cornières (« clips » en terminologie anglo-saxonne). Dans la plupart des cas en effet, le cadre n'est pas en contact direct avec la peau.

Des pièces appelées stabilisateurs (« cleats » en terminologie anglo-saxonne) sont en outre utilisées pour relier les cadres aux raidisseurs, en particulier pour empêcher les cadres de fléchir, par déversement, lorsqu'ils sont sollicités mécaniquement.

L'assemblage des cadres, cornières et stabilisateurs sur le panneau déjà constitué de la peau et des raidisseurs est une opération coûteuse de par sa longueur et les ajustements qu'elle requiert.

Une structure d'avion composée d'une peau renforcée avec un réseau de raidisseurs orientés à 60° entre eux, les raidisseurs étant en forme de lames et étant intégrés au panneau, est déjà connue sous le nom de structure « Isogrid ». Toutefois, cette structure n'est habituellement mise en oeuvre que pour un matériau isotrope et non pour des matériaux composites. L'invention propose de remédier à au moins un des inconvénients cités précédemment.

Le document EP 2 317 126 décrit un procédé de fabrication d'une structure comportant une peau et des raidisseurs fixés sur la peau, comprenant les étapes suivantes :- placement d'éléments de moulage sur un mandrin afin de former des gorges entre lesdits éléments, lesdites gorges étant disposées selon au moins deux réseaux, une gorge d'un réseau rencontrant au moins une gorge d'un autre réseau en un point appelé noeud; - positionnement de préformes de raidisseurs dans les gorges de sorte que deux raidisseurs au moins se rencontrent au niveau dudit noeud; - injection de résine de manière à assembler les raidisseur.

L'invention concerne donc un procédé de fabrication d'une structure comportant une peau et des raidisseurs fixés sur la peau, comprenant les étapes suivantes :
- positionnement d'éléments de moulage sur un mandrin afin de former des gorges entre lesdits éléments, lesdites gorges étant disposées selon au moins deux réseaux, une gorge d'un réseau rencontrant au moins une gorge d'un autre réseau en un point appelé noeud ;
- positionnement de préformes de raidisseurs dans les gorges de sorte que deux raidisseurs au moins se rencontrent au niveau dudit noeud ;
- injection de résine de manière à assembler lesdits deux raidisseurs.

Les gorges reproduisant avantageusement la disposition voulue pour les raidisseurs, un tel agencement des raidisseurs en réseaux, par exemple dans la direction circonférentielle et parallèles entre eux, permet de s'affranchir de l'utilisation de cadres, de cornières et de stabilisateurs car il permet d'obtenir une structure de résistance équivalente.

Le procédé tel que défini permet donc d'obtenir une structure résistante faite d'une seule pièce, ce qui permet de gagner du temps lors de la fabrication et de minimiser les coûts associés par rapport à une structure classique.

Grâce au procédé objet de l'invention, il n'est plus nécessaire de réaliser les opérations coûteuses et fastidieuses que sont la fixation et l'ajustement de cornières et de stabilisateurs.

En effet les seules opérations requises lors de ce procédé sont des opérations de positionnement des raidisseurs et d'injection de résine les liant entre eux, qui sont grandement facilitées par la présence des gorges sur le mandrin.

Selon une caractéristique possible de l'invention, la surface délimitée par l'extension longitudinale d'une gorge d'au moins un réseau n'est pas normale à l'axe du mandrin.

Autrement dit, le réseau est disposé de façon oblique par rapport aux circonférences du mandrin, autrement dit du fuselage (utilisées dans une structure classique de cadres) pour cette application particulière. Certains raidisseurs peuvent être circonférentiels (c'est-à-dire perpendiculaires à l'axe du fuselage), d'autres parallèles à l'axe du fuselage.

Une configuration possible comprend deux réseaux de raidisseurs, aucune des surfaces délimitées par les raidisseurs n'étant normales à l'axe de fuselage. Par exemple, l'angle formé par deux raidisseurs appartenant à des réseaux différents est égal à 45°. D'autres angles peuvent cependant être envisagés.

Une autre configuration possible comprend deux réseaux de raidisseurs, les surfaces délimitées par les raidisseurs du premier réseau étant normales à l'axe du fuselage (de façon circonférentielle, de façon équivalente à celle d'un réseau de cadres habituel) et les surfaces délimitées par les raidisseurs du second réseau ne l'étant pas. L'angle entre deux raidisseurs des deux réseaux différents est par exemple égal à 30° mais peut être différent. Un nombre plus important de réseaux peut également être envisagé.

En particulier, afin d'obtenir une structure plus résistante, les raidisseurs peuvent être disposés selon au moins trois réseaux, chaque noeud étant un point d'intersection entre au moins trois raidisseurs d'au moins trois réseaux différents.

Ainsi, une configuration possible comprend trois réseaux, les surfaces délimitées par les raidisseurs d'un des réseaux étant normales à l'axe du fuselage (de façon équivalente à celle d'un réseau de cadres habituel, c'est-à-dire de façon circonférentielle), les deux autres étant disposés de façon oblique par rapport à ce dernier.

De préférence, la disposition des réseaux de raidisseurs est géodésique.

La structure géodésique fournit aux réseaux de raidisseurs une disposition géométrique facile à réaliser, et optimale d'un point de vue de la répartition des efforts mécaniques.

Avant injection de résine, les composants comme la peau ou les raidisseurs sont de préférence sous forme de préformes textiles.

Il s'agit de structures constituées de fibres sèches et fabriquées à partir de tissus ou multiaxiaux unidirectionnels ou fabriquées directement par exemple par tressage.

Pour donner de la cohésion à ces préformes textiles, les fibres sèches sont de préférence liées entre elles, soit par une poudre époxy en faible quantité (par exemple 2 à 5 % en masse), soit par couture, soit par pose d'un voile thermoplastique.

En particulier, les raidisseurs sont constitués d'un revêtement et de renforts.

Ainsi, le procédé peut comporter en outre, d'une part, une étape de positionnement de préforme de revêtement de raidisseurs dans les gorges et, d'autre part, une étape de positionnement de renforts de raidisseurs sur lesdits revêtements.

Ces deux étapes ont lieu de préférence l'une après l'autre, et au cours de l'étape de positionnement des raidisseurs, soit avant l'étape d'injection de résine.

Les renforts servent principalement à supporter des efforts de traction-compression, voire de flexion. Le rôle du revêtement est notamment d'assurer la liaison avec la peau et d'apporter une protection aux renforts des raidisseurs.

Selon une caractéristique possible de l'invention, le procédé de fabrication comporte en outre une étape de drapage de préforme de la peau.

Cette étape est de préférence la dernière étape avant l'injection de résine.

Selon une caractéristique possible de l'invention, les raidisseurs présentent un profil en V.

Un profil en V permet de retirer facilement les éléments de moulage utilisés lors de l'étape d'injection de la résine qui intervient lors de la fabrication des raidisseurs. Toutefois, d'autres sections peuvent être envisagées telles que les des profils classiques en T ou en Oméga.

Afin de consolider la structure, les renforts des raidisseurs sont composés de mèches ou fils unidirectionnels et le revêtement des raidisseurs est composé de tissus ou multiaxiaux.

Les renforts servent principalement à supporter des efforts de traction-compression, voire de flexion. Ils sont constitués par exemple de mèches ou fils unidirectionnelles (UD) sèches en fibres composites tels que des fibres de carbone et du revêtement travaillant pouvant être constitué de tissus ou de multiaxiaux de renfort. De préférence, les filtres sont orientés à 0° soit dans l'axe longitudinal du raidisseur.

Ces renforts unidirectionnels sont de préférence continus.

Le revêtement est quant à lui de préférence composé de tissus ou multiaxiaux, permettant ainsi d'assurer la liaison avec la peau et d'apporter une protection aux fibres unidirectionnelles des raidisseurs.

Par exemple, chaque revêtement est constitué de plis de fibres composites multicouches dont les couches sont disposées à 0°, 90°, 45° et-45°.

Il s'agit là d'une configuration résistante aux efforts mis en jeu.

Alternativement, chaque revêtement est constitué de plis de fibres composites multicouches dont les couches sont disposées à 0°, 90° 30° et -30°.

Afin d'obtenir une structure faite d'une seule pièce, la préforme de la peau est drapée sur les préformes de raidisseurs.

Selon une caractéristique possible, le procédé selon l'invention comprend également une étape de positionnement d'une pièce de tissu sensiblement circulaire percée en son centre au niveau du noeud (appelée chapeau) assurant une liaison mécanique entre les raidisseurs se rencontrant en chaque noeud.

Les chapeaux ont notamment pour but de relier les revêtements des raidisseurs entre eux et ainsi de répartir une partie des efforts de cisaillement. Ils recouvrent pour cela toutes les extrémités des raidisseurs au niveau de chaque noeud.

La forme circulaire percée d'un trou permet de faciliter le drapage et d'obtenir une meilleure répartition des efforts.

A cet effet, les chapeaux sont par exemple constitués d'un tissu de renfort de matériau composite, ou un multiaxial.

Afin d'assurer une liaison résistante entre les raidisseurs et la peau, la résine est injectée dans les préformes de raidisseurs entre les éléments de moulage, et entre la préforme de la peau et les poinçons Cette co-imprégnation de résine permet également d'absorber les efforts résiduels.

De manière à obtenir une bonne qualité d'imprégnation des préformes par la résine, l'injection des raidisseurs et l'injection de la peau peuvent être réalisées séparément.

En particulier, l'injection des raidisseurs peut être une injection linéaire dans les gorges entre les poinçons, et est réalisée sur pratiquement toute la longueur des raidisseurs. L'injection de la peau, quant à elle, peut être soit ponctuelle au centre des poinçons sous la peau, soit, pour avoir une bonne qualité d'imprégnation de la peau, surfacique sur toute la surface des poinçons à l'interface poinçon-peau. De préférence, la résine est injectée puis polymérisée.

Selon une caractéristique particulière, l'injection se fait par une méthode de moulage au sac dans une étuve à l'aide d'un grillage diffuseur.

L'invention concerne également un dispositif de fabrication d'une structure comportant une peau et des raidisseurs fixés sur la peau, comportant :
- un mandrin ;
- des poinçons fixés sur le mandrin de manière à former des gorges entre lesdits poinçons, lesdites gorges étant disposées selon au moins deux réseaux, une gorge d'un réseau rencontrant au moins une gorge d'un autre réseau en un point appelé noeud ;
- un système de positionnement de raidisseurs dans les gorges de sorte que deux raidisseurs au moins se chevauchent au niveau dudit noeud ;
- un système d'injection de résine de manière à assembler les dits deux raidisseurs.

Selon une caractéristique possible de l'invention, le dispositif comporte en outre, d'une part, un système de drapage de préforme de revêtement de raidisseur dans lesdites gorges et, d'autre part, un système de bobinage de fils unidirectionnels dans lesdites préformes de manière à constituer un renfort de raidisseur.

De préférence, la fabrication des préformes de revêtements de raidisseurs se fait par un système d'emboutissage ou par un système de préformage en continu qui sont des solutions simples et économiques.

Pour des raisons similaires, le bobinage se fait à l'aide d'un moyen automatique de bobinage filamentaire ou par placement de fibres sèches. En particulier, un bobinage automatique permet notamment de gagner du temps au cours de la fabrication.

Selon une caractéristique possible de l'invention, le dispositif comporte également un système de drapage de préforme de la peau.

Selon un mode de réalisation particulier du dispositif, les poinçons ont une section trapézoïdale.

Cette section des poinçons est liée à la forme désirée pour les raidisseurs du fait qu'ils forment entre eux les gorges. Ainsi, afin que la section de gorges soit en V, la section des poinçons est biseautée, et est en particulier en forme de trapèze, un poinçon à surface plane étant plus simple d'utilisation, en particulier lors de son positionnement sur le mandrin.

D'autres sections de poinçons sont donc envisageables selon la forme que l'on souhaite donner aux raidisseurs.

Selon une caractéristique possible, la fixation de poinçons sur le mandrin se fait par l'intermédiaire d'au moins deux vis insérées dans chaque poinçon dans des trous prévus à cet effet, le trou taraudé dans lequel est disposée une première vis et le trou dans lequel est disposée une deuxième vis comportant un pion de guidage

L'utilisation d'un insert dans le trou taraudé, de préférence en acier et/ou de type hélicoïl, dans des poinçons par exemple réalisés en aluminium, permet d'améliorer la durée de vie du vissage.

En outre, l'utilisation d'un pion de guidage permet de bloquer le degré de liberté en rotation d'une des vis tout en permettant une dilatation différentielle entre le mandrin et un poinçon lors des différentes étapes de fabrication.

D'autres caractéristiques et avantages apparaitront au cours de la description qui va suivre, donnée à titre d'exemple non limitatif et faite en référence aux dessins annexés, sur lesquels :

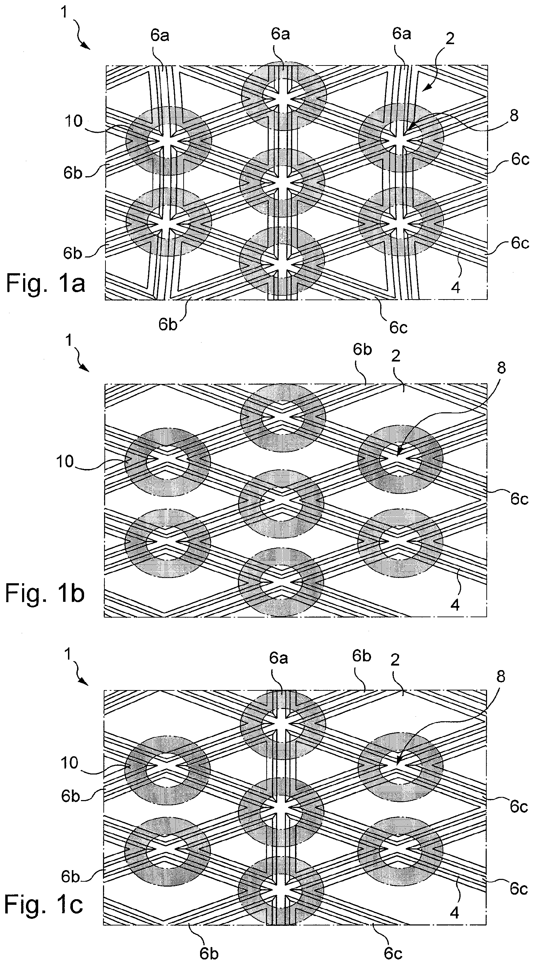

- la figure 1a est une représentation schématique d'une partie d'une structure, en l'occurrence d'un fuselage selon l'invention dans un premier mode de réalisation;
- la figure 1 b est une représentation schématique d'une partie d'une structure, en l'occurrence d'un fuselage selon l'invention dans un deuxième mode de réalisation ;
- la figure 1c est une représentation schématique d'une partie d'une structure, en l'occurrence d'un fuselage selon l'invention dans un troisième mode de réalisation ;
- la figure 2 est une représentation schématique d'une coupe d'une partie du fuselage de la figure 1 a;
- la figure 3 est une représentation schématique d'une coupe d'une partie des éléments de fabrication du fuselage de la figure 1 a avant drapage de la préforme de la peau;
- la figure 4 est une représentation d'une vue de dessus des éléments de la figure 3;
- la figure 5 est une représentation schématique en coupe d'un système de fixation des éléments de la figure 3;
- la figure 6 est une représentation schématique en coupe d'une partie des éléments de fabrication du fuselage de la figure 1a après drapage de la peau;
- la figure 7 est une représentation schématique d'un principe de moulage d'une structure cylindrique qui pourrait être un élément de fuselage;
- la figure 8 est une représentation schématique en coupe des éléments de fabrication du fuselage de la figure 1 a lors de l'habillage avant polymérisation de la résine.

Le tronçon de fuselage représenté à la figure 1 a comprend une peau 2, à laquelle sont solidarisés des raidisseurs 4. La peau 2 est constituée de couches de fibres de renfort.

Les raidisseurs 4 sont composés de renforts à fibres unidirectionnelles enveloppées dans des tissus ou des multiaxiaux comme on le décrira plus loin, de même que la façon dont la peau et les raidisseurs sont solidarisés.

Dans le mode de réalisation présenté sur cette figure 1 a, les raidisseurs 4 sont répartis selon trois réseaux 6a, 6b et 6c, chaque réseau étant composé de raidisseurs s'étendant dans des plans parallèles entre eux.

Les réseaux 6a, 6b, 6c sont disposés de manière à ce que tout point d'intersection entre deux raidisseurs de deux réseaux différents, ou noeud 8, est également un point d'intersection avec un des raidisseurs du troisième réseau. De façon optionnelle, par exemple pour limiter l'encombrement, les points d'intersection avec le troisième réseau peuvent être légèrement décalés par rapport au point d'intersection des deux premiers réseaux

Toutefois, d'autres modes de réalisation peuvent être envisagés, notamment une disposition des réseaux telle qu'un point d'intersection entre deux raidisseurs de deux réseaux différents n'est pas toujours un point d'intersection avec un autre raidisseur d'un troisième réseau. Par exemple, la distance entre les raidisseurs d'un même réseau peut être choisie pour qu'un raidisseur sur deux d'un même réseau rencontre les raidisseurs des deux autres réseaux. Un autre mode de réalisation présenté à la figure 1 b ne comprend que deux réseaux de raidisseurs 6b, 6c disposés de façon oblique par rapport à un réseau circonférentiel de cadres, afin de reprendre les efforts que supportent habituellement les cadres, les cornières et les stabilisateurs.

Une autre configuration possible (non représentée) impliquerait qu'un des réseaux 6b, 6c soit disposé de manière circonférentielle sur la peau 2, à l'instar du réseau 6a de la figure 1 a.

On remarquera que dans le mode de réalisation présenté figure 1a, les réseaux 6a, 6b, 6c sont disposés de façon géodésique. En particulier, les raidisseurs 4 d'un même réseau 6 sont placés à égale distance l'un de l'autre et cette distance est la même pour les trois réseaux 6a, 6b, 6c.

Alternativement, la distance séparant les raidisseurs 4 d'un même réseau est différente pour chaque réseau comme l'illustre la figure 1c.

Sur cette figure 1 c, la distance entre les raidisseurs du réseau 6a est différente de la distance entre les raidisseurs du réseau 6b et du réseau 6c, et par exemple sa valeur est double par rapport aux autres distances. Les raidisseurs 4 du réseau 6a rencontrent donc les autres raidisseurs en un noeud 8 sur deux.

Dans tous les modes de réalisation, le réseau forme donc en projection dans un plan des polygones dont les sommets sont les noeuds 8. Dans les exemples illustrés figures 1 a, 1 b et 1 c ces polygones sont des triangles ou des losanges.

De façon optionnelle, et comme représenté figures 1 a-c les noeuds 8 sont équipés d'un chapeau 10.

Un chapeau 10 est constitué notamment d'un tissu de renfort de matériau composite, ou un multiaxial, dont la fonction est d'assurer une liaison mécanique entre les raidisseurs 4 se rencontrant en chaque noeud 8 et de reprendre une partie des efforts de cisaillement. Ils recouvrent pour cela toutes les extrémités des raidisseurs 4 au niveau de chaque noeud 8.

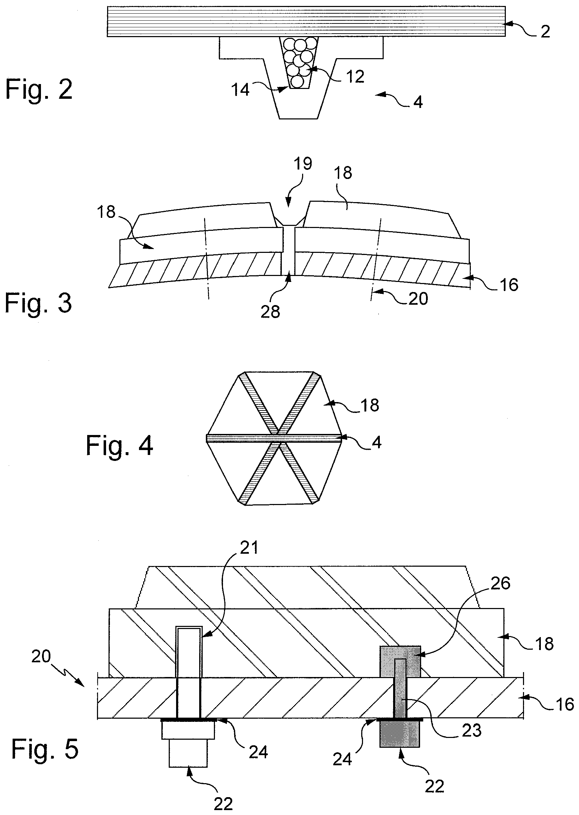

La structure d'un raidisseur 4 est illustrée à la figure 2. Chaque raidisseur comprend un renfort 12 constitué, de préférence, de fibres ou brins de renforts unidirectionnels s'étendant dans la direction du raidisseur et d'un revêtement en tissu ou multiaxiaux.

En particulier, ces renforts fibreux peuvent être réalisés en carbone ou tout autre matériau utilisé de façon courante dans ce genre d'applications dans le domaine aéronautique. De cette façon, les raidisseurs bénéficient d'une bonne résistance à la traction et en partie même à la flexion.

Les renforts unidirectionnels 12 sont enveloppés dans un revêtement 14 en tissu ou multiaxiaux. Ils sont de section triangulaires, mais d'autres sections telles qu'en T ou en Oméga peuvent être envisagées.

De façon privilégiée, les revêtements 14 sont composés de tissus ou multiaxiaux, par exemple de façon connue à travers une structure en couches réparties à 0°, 90°, -45° et 45°, à 0°, 90°, -30° et 30° à -45° et 45°, ou encore à-30° et 30°.

La peau 2 est drapée sur les revêtements 14 et renforts unidirectionnels 12 au cours d'une opération de moulage. Ceci permet d'obtenir une structure faite d'une seule pièce, ce qui réduit les coûts de fabrication.

Les figures suivantes illustrent le procédé de fabrication d'une structure selon l'invention. On parlera ici de préforme de raidisseur avant l'étape d'injection.

Comme illustré à la figure 3, la première étape du procédé de fabrication consiste à placer sur un mandrin 16 des poinçons 18 qui sont de préférence réalisés en aluminium et de sections trapézoïdale.

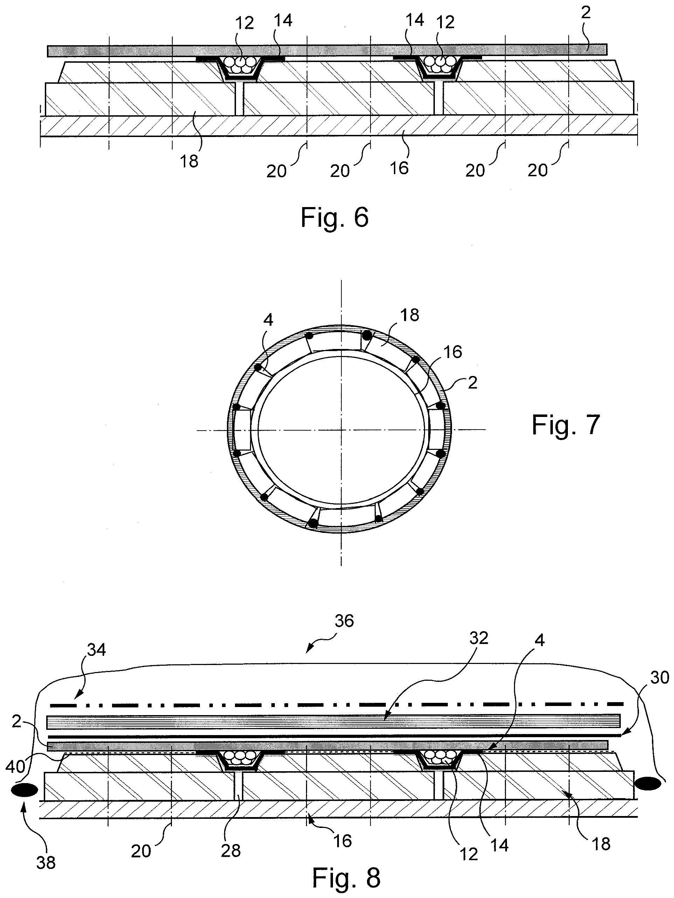

Le mandrin 16 est dans le mode de réalisation présenté à la figure 7 un cylindre, mais il peut s'agit d'une tôle courbée comme illustré à la figure 3.

En particulier, il peut être expansible thermiquement.

Les poinçons 18 sont ici identiques et de forme sensiblement triangulaire comme l'illustre la vue de dessus présentée figure 4.

Ce choix particulier est lié au fait que l'on veuille que les réseaux 6a, 6b, 6c soient répartis de façon géodésique.

Dans d'autres modes de réalisation (non représentés) la forme des poinçons 18 peut varier, en particulier être proche de celle d'un losange dans le cas d'une structure à deux réseaux orientés à 45°. Dans d'autres modes de réalisations encore, les poinçons 18 peuvent ne pas tous avoir la même forme.

La section des poinçons 18 est liée à la forme désirée pour les raidisseurs. En effet les poinçons 18 sont répartis de façon régulière et légèrement espacés les uns des autres de façon à former entre eux des gorges 19.

Ces gorges 19 servant d'enveloppe aux préformes des raidisseurs 4.

Leur forme et leur taille est choisie de façon à obtenir la section désirée pour les raidisseurs. Ainsi, dans le mode de réalisation présenté à la figure 3, la section des poinçons 18 est biseautée de manière à ce que les gorges aient une section en forme de V.

Dans d'autres modes de réalisation, en particulier ceux où les raidisseurs auraient une forme en T ou en Omega, la section des poinçons 18 serait adaptée en conséquence.

Les poinçons 18 sont fixés au mandrin 16 à l'aide de moyens de fixation 20 représentés schématiquement par une ligne pointillée sur les figures 3, 6 et 8 pour des raisons de clarté.

Ils sont illustrés plus en détail à la figure 5.

Dans ce mode de réalisation particulier, un moyen de fixation 20 est constitué d'au moins deux vis 22, d'un insert 21, d'un pion de guidage 23 et de joints d'étanchéité 24.

Dans des formes de réalisation alternatives, un moyen de fixation 20 peut comprendre un nombre différent de chacun des éléments précédemment cités, ou même ne pas comprendre d'insert ou de pion de guidage.

Pour chaque poinçon, une des deux vis 22 traverse le mandrin et sert de pion de guidage 23 dans un trou oblong 26 pratiqué à cet effet. Elles sont positionnées de façon à supporter les charges appliquées au poinçon et à autoriser les dilations différentielles entres le poinçon et le mandrin. Pour faciliter le montage, les vis sont vissées du côté de l'intérieur du mandrin 16.

Un insert 21, de préférence réalisé en acier et de type « hélicoïl », est intégré entre au moins une des vis 22 et le poinçon 18 de façon à allonger la durée de vie du vissage.

Afin de bloquer le degré de liberté en rotation tout en permettant une dilatation différentielle des vis 22 et du poinçon 18 lors du chauffage de l'ensemble, au moins un pion de guidage 23 est placé dans un trou oblong 26.

Des joints d'étanchéité 24 sont prévus pour être disposés entre la tête de la vis 22 et la surface interne du mandrin 16. Ils permettent notamment d'éviter que de l'air ne rentre dans le moule lors de l'injection sous vide de la résine, ce qui provoquerait des porosités dans le matériau composite et par conséquent affecterait ses caractéristiques mécaniques.

Un joint d'étanchéité, non représenté sur la figure 5, peut également être placé autour du fut de la vis 22 à l'interface du mandrin 16 et du poinçon 18 de manière à éviter que la résine ne s'insère entre le poinçon et la vis lors de l'étape d'injection. Ceci permet de faciliter le retrait des vis 22 lors du démoulage de la pièce.

Une fois les poinçons 18 fixés au mandrin 16, une étape facultative (non représentée).de mise en place des chapeaux 10 peut être mise en oeuvre.

On rappelle que les chapeaux 10 sont typiquement des pièces de tissus ou multiaxiaux de forme sensiblement circulaire percées d'un trou en leur centre au niveau des noeuds.

Cette forme permet de faciliter le drapage des chapeaux et de bien répartir les efforts de cisaillement subis au niveau des noeuds.

Toutefois, des formes alternatives et des matériaux différents peuvent être envisagés pour réaliser les chapeaux.

Puis, les revêtements 14 des préformes de raidisseurs 4 sont placés dans les gorges 19, par exemple à l'aide d'un système d'emboutissage ou encore un système de préformage en continu.

Les fibres unidirectionnelles composant les renforts 12 des préformes des raidisseurs 4 sont ensuite placées dans les gorges 19 tapissées des revêtements 14.

Ce placement est notamment réalisé à l'aide d'une étape de bobinage, dans laquelle le mandrin 16 et les poinçons 18 font office de corps de bobine et les fibres unidirectionnelles de fils.

Enfin, la préforme de la peau 2 du fuselage est drapée sur la surface des poinçons et des préformes de raidisseurs 4.

Les figures 6 et 7 illustrent l'état de la structure de fuselage 1 une fois ces étapes de positionnement réalisées.

La figure 8 illustre quant à elle l'étape d'injection de résine du procédé de fabrication du fuselage 1.

Dans ce mode de réalisation particulier, l'injection se fait par une méthode connue en soi de moulage au sac dans une étuve.

Plus particulièrement, la peau 2 est recouverte successivement d'un tissu d'arrachage 30, d'une tôle de lissage 32 (« caul plate » en terminologie anglo-saxonne), d'un tissu de drainage 34 et d'un sac à vide 36.

Par exemple, l'injection se fait à l'aide des points d'injection 28 placés sous chacun des noeuds 8 et au niveau des préformes de raidisseurs 4. Une injection de résine à basse pression (couramment appelé RTM pour « resin transfer moulding » en terminologie anglo-saxonne) est réalisée au niveau des noeuds 8 et préformes de raidisseurs 4 et une de type LRI (« liquid resin infusion » en terminologie anglo-saxonne) entre les préformes de raidisseurs 4.

De manière à obtenir une bonne qualité d'imprégnation des préformes par la résine, l'injection des raidisseurs et l'injection de la peau sont réalisées séparément.

En effet l'injection des raidisseurs est une injection linéaire dans les gorges entre les poinçons, et est réalisée sur pratiquement toute la longueur des raidisseurs. L'injection de la peau, quant à elle, est soit ponctuelle au centre des poinçons sous la peau, soit, pour avoir une bonne qualité d'imprégnation de la peau, surfacique (type LRI) sur toute la surface des poinçons à l'interface poinçon-peau.

L'injection de type LRI se fait notamment à l'aide d'un grillage diffuseur 40 représenté à la figure 8 (non représenté dans les autres figures pour des raisons de clarté). Des joints d'étanchéité 38 placés sont prévus pour assurer un bon niveau de vide dans le moule.

La disposition de ces joints 38 varie selon la forme du mandrin 16. S'il s'agit d'un cylindre, ils sont placés sur les bords des sacs à vide 36 et aux extrémités du mandrin 16 sur le mandrin 16. Si le mandrin 16 est une tôle courbe les joints 38 sont placés sur la périphérie du mandrin 16.

D'autres techniques de moulage, tels des moulages par autoclave, sous vide, sous pression, à la presse ou à l'aide d'un mandrin expansible peuvent également être envisagées.

Le procédé décrit ci-dessus permet donc d'obtenir une structure de fuselage faite d'une seule pièce, possédant une résistance mécanique équivalente à celle d'une structure classique comportant des cornières (« clips ») et des stabilisateurs (« cleats ») sans avoir nécessairement à y intégrer ces pièces (ou à en utiliser en nombre réduit), et de ce fait d'un coût de fabrication et de montage moindre.

Les modes de réalisation présentés ci-dessus ne sont que des exemples possibles de mise en oeuvre de l'invention, qui ne s'y limite pas.

## Revendications

1. Procédé de fabrication d'une structure comportant une peau (2) et des raidisseurs (4) fixés sur la peau (2), **caractérisé en ce qu'**il comprend les étapes suivantes :
- positionnement d'éléments de moulage (18) sur un mandrin (16) afin de former des gorges (19) entre lesdits éléments (18), lesdites gorges (19) étant disposées selon au moins deux réseaux (6a, 6n, 6c), une gorge d'un réseau rencontrant au moins une gorge (19) d'un autre réseau en un point appelé noeud (8) ;
- positionnement de préformes de raidisseurs (4) dans les gorges (19) de sorte que deux raidisseurs (4) au moins se rencontrent au niveau dudit noeud (8) ;
- injection de résine de manière à assembler les raidisseurs (4).

2. Procédé de fabrication selon la revendication 1, **caractérisé en ce que** la surface définie par l'extension longitudinale d'une gorge (19) d'au moins un réseau (6, 6b, 6c) n'est pas normale à l'axe du mandrin (16).

3. Procédé de fabrication selon l'une quelconque des revendications 1 à 2, **caractérisé en ce qu'**il comprend en outre, d'une part, une étape de positionnement de revêtements de raidisseurs (14) dans les gorges (19) et, d'autre part, une étape de positionnement de renforts (12) de raidisseurs sur lesdits revêtements (14).

4. Procédé de fabrication selon l'une quelconque des revendications 1 à 3, **caractérisé en ce qu'**il comprend en outre une étape de drapage de préforme de la peau (2) sur les préformes de raidisseurs (4).

5. Procédé de fabrication selon l'une des revendications 1 à 4, **caractérisé en ce que** les raidisseurs (4) présentent un profil en V.

6. Procédé de fabrication selon l'une quelconque des revendications 1 à 5, **caractérisé en ce que** les renforts (12) des raidisseurs sont constitués de mèche ou fils unidirectionnels, et **en ce que** le revêtement (14) des raidisseurs est composé de tissus ou multiaxiaux.

7. Procédé de fabrication selon l'une quelconque des revendications 1 à 6, **caractérisé en ce qu'**il comprend en outre une étape de positionnement d'une pièce de tissu (10) sensiblement circulaire percée en son centre au niveau du noeud (8) assurant une liaison mécanique entre les raidisseurs (4) se rencontrant en chaque noeud (8).

8. Procédé de fabrication selon l'une quelconque des revendications 1 à 7, **caractérisé en ce que** la résine est injectée dans les préformes de raidisseurs (4) entre les éléments de moulage (18), et entre la préforme de la peau (2) et les éléments de moulage (18).

9. Procédé de fabrication selon l'une des revendications 1 à 8, **caractérisé en ce que** l'injection se fait par une méthode de moulage au sac dans une étuve à l'aide d'un grillage diffuseur (40).

10. Dispositif de fabrication d'une structure comportant une peau (2) et des raidisseurs (4) fixés sur la peau (2), **caractérisé en ce qu'**il comprend :
- un mandrin (16) ;
- des poinçons (18) fixés sur le mandrin (16) de manière à former des gorges (19) entre lesdits poinçons (18), lesdites gorges (19) étant disposées selon au moins deux réseaux (6a, 6b, 6c), une gorge (19) d'un réseau (6a, 6b, 6c) rencontrant au moins une gorge (19) d'un autre réseau (6a, 6b, 6c) en un point appelé noeud (8) ;
- un système de positionnement de raidisseurs (4) dans les gorges (19) de sorte que deux raidisseurs (4) au moins se rencontrent au niveau dudit noeud (8) ;
- un système d'injection de résine de manière à assembler les raidisseurs (4).

11. Dispositif de fabrication selon la revendication 10, **caractérisé en ce qu'**il comprend en outre, d'une part, un système de drapage de préforme de revêtement de raidisseur (4) dans lesdites gorges (19) et, d'autre part, un système de bobinage de fils unidirectionnels dans lesdites préformes de manière à constituer un renfort (12) de raidisseur.

12. Dispositif de fabrication selon l'une quelconque des revendications 10 à 11, **caractérisé en ce que** les poinçons (18) ont une section trapézoïdale.

13. Dispositif de fabrication selon l'une quelconque des revendications 10 à 12, **caractérisé en ce que** les poinçons (18) sont fixés sur le mandrin (16) par l'intermédiaire d'au moins deux vis (22) insérées dans chaque poinçon (18) dans des trous (26) prévus à cet effet, le trou (26) dans le poinçon dans lequel est disposée une première vis (22) comportant un insert (21) et le trou (26) dans le poinçon dans lequel est disposée une deuxième vis (22) étant oblong pour assurer un guidage.

## Patentansprüche

1. Verfahren zur Herstellung einer Struktur, die eine Haut (2) und Versteifungen (4), die auf der Haut (2) befestigt sind, umfasst, **dadurch gekennzeichnet, dass** es die folgenden Schritte umfasst:
- Positionieren von Formelementen (18) auf einem Dorn (16), um Hohlkehlen (19) zwischen den Elementen (18) zu bilden, wobei die Hohlkehlen (19) entlang von mindestens zwei Netzwerken (6a, 6n, 6c) angeordnet sind, wobei eine Hohlkehle eines Netzwerks mindestens eine Hohlkehle (19) eines anderen Netzwerks an einer Knoten genannten Stelle (8) antrifft,
- Positionieren von Vorformen von Versteifungen (4) in den Hohlkehlen (19) derart, dass mindestens zwei Versteifungen (4) im Bereich des Knotens (8) aufeinandertreffen,
- Einspritzen von Harz derart, dass die Versteifungen (4) zusammengefügt werden.

2. Herstellungsverfahren nach Anspruch 1, **dadurch gekennzeichnet, dass** die von der Längserweiterung einer Hohlkehle (19) definierte Oberfläche mindestens eines Netzwerks (6, 6b, 6c) zu der Achse des Dorns (16) nicht senkrecht ist.

3. Herstellungsverfahren nach einem der Ansprüche 1 bis 2, **dadurch gekennzeichnet, dass** es außerdem einerseits einen Schritt des Positionierens von Beschichtungen von Versteifungen (14) in den Hohlkehlen (19) umfasst, und, andererseits, einen Schritt des Positionierens von Verstärkungen (12) von Versteifungen auf den Beschichtungen (14).

4. Herstellungsverfahren nach einem der Ansprüche 1 bis 3, **dadurch gekennzeichnet, dass** es außerdem einen Schritt des Aufschrumpfens von Vorformen der Haut (2) auf den Vorformen von Versteifern (4) umfasst.

5. Herstellungsverfahren nach einem der Ansprüche 1 bis 4, **dadurch gekennzeichnet, dass** die Versteifungen (4) ein V-Profil aufweisen.

6. Herstellungsverfahren nach einem der Ansprüche 1 bis 5, **dadurch gekennzeichnet, dass** die Verstärkungen (12) der Versteifungen aus Docht oder Einrichtungsfäden bestehen, und dass die Beschichtung (14) der Versteifungen aus Textilen oder Multiaxialen bestehen.

7. Herstellungsverfahren nach einem der Ansprüche 1 bis 6, **dadurch gekennzeichnet, dass** es außerdem einen Schritt des Positionierens eines Textilteils (10), das im Wesentlichen kreisförmig ist, das in seiner Mitte im Bereich des Knotens (8) durchbohrt ist, das eine mechanische Verbindung zwischen den Versteifungen (4), die in jedem Knoten (8) aufeinandertreffen, sicherstellt, umfasst.

8. Herstellungsverfahren nach einem der Ansprüche 1 bis 7, **dadurch gekennzeichnet, dass** das Harz in die Vorformen von Versteifungen (4) zwischen den Formelementen (18) und zwischen der Vorform der Haut (2) und den Formelementen (18) eingespritzt wird.

9. Herstellungsverfahren nach einem der Ansprüche 1 bis 8, **dadurch gekennzeichnet, dass** die Einspritzung anhand eines Sackformverfahrens in einem Wärmeschrank mit Hilfe eines Verteilungsgitters (40) erfolgt.

10. Vorrichtung zum Herstellen einer Struktur, die eine Haut (2) und Versteifungen (4), die auf der Haut (2) befestigt sind, umfasst, **dadurch gekennzeichnet, dass** es Folgendes umfasst:
- einen Dorn (16),
- Stempel (18), die auf dem Dorn (16) derart befestigt sind, dass sie Hohlkehlen (19) zwischen den Stempeln (18) bilden, wobei die Hohlkehlen (19) entlang mindestens zwei Netzwerken (6a, 6b, 6c) angeordnet sind, wobei eine Hohlkehle (19) eines Netzwerks (6a, 6b, 6c) mindestens eine Hohlkehle (19) eines anderen Netzwerks (6a, 6b, 6c) an einer Knoten (8) genannten Stelle antrifft,
- ein Positionierungssystem der Versteifungen (4) in den Hohlkehlen (19) derart, dass mindestens zwei Versteifungen (4) im Bereich des Knotens (8) aufeinandertreffen,
- ein System zum Einspritzen von Harz derart, dass die Versteifungen (4) zusammengefügt werden.

11. Herstellungsvorrichtung nach Anspruch 10, **dadurch gekennzeichnet, dass** sie außerdem einerseits ein System zum Vorformaufschrumpfen zum Beschichten der Versteifung (4) in den Hohlkehlen (19) umfasst und, andererseits, ein System zum Aufwickeln von Einrichtungsfäden in den Vorformen, so dass eine Versteifungsverstärkung (12) gebildet wird.

12. Herstellungsvorrichtung nach einem der Ansprüche 10 bis 11, **dadurch gekennzeichnet, dass** die Stempel (18) einen trapezförmigen Querschnitt haben.

13. Herstellungsvorrichtung nach einem der Ansprüche 10 bis 12, **dadurch gekennzeichnet, dass** die Stempel (18) auf dem Dorn (16) über mindestens zwei Schrauben (22) befestigt sind, die in jeden Stempel (18) in Bohrungen (26), die dazu vorgesehen sind, eingeführt werden, wobei die Bohrung (26) in dem Stempel, in dem eine erste Schraube (22) angeordnet ist, einen Einsatz (21) umfasst, und die Bohrung (26) in dem Stempel, in der eine zweite Schraube (22) angeordnet ist, länglich ist, um eine Führung sicherzustellen.

## Claims

1. Method for manufacturing a structure comprising a skin (2) and stiffeners (4) fastened to the skin (2), **characterised in that** it comprises the following steps:
- positioning molding parts (18) on a mandrel (16) in order to form channels (19) between said parts (18), said channels (19) being disposed in at least two networks (6a, 6n, 6c), a channel of a network meeting at least one channel (19) of another network at a point referred to as a node (8);
- positioning preforms for stiffeners (4) in the channels (19) such that two stiffeners (4) at least meet at said node (8);
- injecting resin so as to assemble the stiffeners (4).

2. Manufacturing method according to claim 1, **characterised in that** the surface delimited by the longitudinal extent of a channel (19) of at least one network (6a, 6b, 6c) is not normal to the axis of the mandrel (16).

3. Manufacturing method according to either of claims 1 and 2, **characterised in that** it further comprises a step of positioning stiffener coverings (14) in the channels (19) and a step of positioning reinforcements (12) for stiffeners on said coverings (14).

4. Manufacturing method according to any one of claims 1 to 3, **characterised in that** it further comprises a step of skin (2) preform draping on the stiffener (4) preforms.

5. Manufacturing method according to one of claims 1 to 4, **characterised in that** the stiffeners (4) have a V-shaped cross-section.

6. Manufacturing method according to any one of claims 1 to 5, **characterised in that** the reinforcements (12) for the stiffeners are constituted by unidirectional yarns or rovings, and **in that** the covering (14) for the stiffeners is composed of fabrics or multiaxials.

7. Manufacturing method according to any one of claims 1 to 6, **characterised in that** it further comprises a step of positioning a substantially circular piece of fabric (10) holed at its center at the location of the node (8) providing a mechanical connection between the stiffeners (4) meeting at each node (8).

8. Manufacturing method according to any one of claims 1 to 7, **characterised in that** the resin is injected into the stiffener (4) preforms between the molding parts (18), and between the skin (2) preform and the molding parts (18).

9. Manufacturing method according to one of claims 1 to 8, **characterised in that** the injection is carried out by a bag molding method in an autoclave using a diffuser mesh (40).

10. Device for manufacturing a structure comprising a skin (2) and stiffeners (4) fastened to the skin (2), **characterised in that** it comprises:
- a mandrel (16);
- punches (18) fastened to the mandrel (16) so as to form channels (19) between said punches (18), said channels (19) being disposed in at least two networks (6a, 6b, 6c), a channel (19) of a network (6a, 6b, 6c) meeting at least one channel (19) of another network (6a, 6b, 6c) at a point referred to as a node (8);
- a system for positioning stiffeners (4) in the channels (19) such that two stiffeners (4) at least meet at said node (8);
- a system for injecting resin so as to assemble the stiffeners (4).

11. Manufacturing device according to claim 10, **characterised in that** it further comprises a system for draping stiffener (4) covering preforms in said channels (19) and a system for unidirectional yarn winding in said preforms so as to constitute a stiffener reinforcement (12).

12. Manufacturing device according to either of claims 10 and 11, **characterised in that** the punches (18) are trapezoidal in cross-section.

13. Manufacturing device according to any one of claims 10 to 12, **characterised in that** the punches (18) are fastened to the mandrel (16) via at least two screws (22) inserted into each punch (18) in holes (26) provided for that purpose, the hole (26) in the punch in which a first screw (22) is disposed comprising an insert (21) and the hole (26) in the punch in which is disposed a second screw (22) being oblong to provide guidance.
